# DEMANDE DE BREVET EUROPEEN

(11) **EP 4 745 766 A1**
(43) Date de publication de la demande: **20.05.2026**
(21) Numéro de dépôt: 25215862.1
(22) Date de dépôt: 14.11.2025
(51) Int. Cl.: G06F 9/4401, G06F 11/14

(54) **DISPOSITIF DE DÉMARRAGE D'AU MOINS UNE UNITÉ DE TRAITEMENT, CALCULATEUR COMPRENANT UN TEL DISPOSITIF ET PROCÉDÉ DE DÉMARRAGE ASSOCIÉ**

(30) Priorité: 15.11.2024 FR 2412501
(71) Demandeur: THALES, 92190 Meudon (FR)
(72) Inventeur: PROUX, Alexandre, 31100 TOULOUSE (FR); RICO, Matthieu, 31100 TOULOUSE (FR); NUNEZ, Cédric, 31100 TOULOUSE (FR)
(74) Mandataire: Lavoix

(57) **Abrégé**

La présente invention concerne un dispositif de démarrage (5) d'au moins une unité de traitement (7A, 7B) au moyen d'au moins un programme de démarrage (11A, 11B, 11C, 11D, 11E) mémorisé par au moins une mémoire (9A, 9B, 9C).

Le dispositif de démarrage (5) comprend un contrôleur (15) et un circuit d'interfaçage (13). Le circuit d'interfaçage (13) présente plusieurs configurations de liaison, chaque configuration de liaison étant unique et permettant d'établir au moins une liaison entre la ou l'une des mémoire(s) (9A, 9B, 9C) et le contrôleur (15) et/ou une liaison entre la ou l'une des mémoire(s) (9A, 9B, 9C) et la ou l'une des unité(s) de traitement (7A, 7B).

Le contrôleur (15) est propre à configurer le circuit d'interfaçage (13) et à commander un démarrage de chaque unité de traitement (7A, 7B) au moyen d'un programme à exécuter (11A) parmi l'au moins un programme de démarrage.

## Description

La présente invention concerne un dispositif de démarrage d'au moins une unité de traitement. Elle concerne également un calculateur comprenant un tel dispositif de démarrage. Elle concerne enfin un procédé de démarrage d'une telle unité de traitement.

Dans le contexte des systèmes numériques critiques, par exemple dans le domaine spatial, se pose la question de la protection de la mémoire de démarrage des composants électroniques du système contre des corruptions. En effet, une altération de cette mémoire peut entraîner une défaillance totale du système critique. Une architecture renforçant la robustesse du démarrage de tels composants est donc utile.

Dans ce contexte, il est connu de démarrer un composant en réalisant un vote majoritaire entre des données de démarrage stockées dans plusieurs mémoires, de façon à fonctionner même en cas de corruption de l'une des mémoires.

Il est également connu du document CN101329632 de transmettre au composant à démarrer des données de démarrage issues d'une première mémoire, ou, en cas d'échec du démarrage avec la première mémoire, des données de démarrage issues d'une seconde mémoire.

Cependant, ces solutions sont très contraignantes vis-à-vis des performances croissantes des composants des systèmes critiques. En effet, les programmes de démarrage sont de plus en plus complexes et nécessitent des interfaces de démarrage de plus en plus rapides, ce qui rend difficile voire impossible la mise en œuvre des solutions précitées.

Il est également connu d'utiliser des composants mémoires durcis, c'est-à-dire dont le stockage est fiabilisé. Toutefois, l'utilisation d'un tel composant dans un système donné est contraignante de par le choix restreint de tels composants, leur coût et parfois leurs performances, pour des raisons similaires aux stratégies précitées.

Enfin, ces solutions usuelles ne sont pas optimisées pour permettre une mise à jour du contenu des mémoires de démarrage en vol sans perte de service et sans risques.

Le but de l'invention est alors de proposer un dispositif de démarrage permettant d'améliorer la robustesse, la performance et la flexibilité du démarrage des composants électroniques, tout en permettant une mise en œuvre aisée.

A cet effet, l'invention a pour objet un dispositif de démarrage d'au moins une unité de traitement, l'au moins une unité de traitement et le dispositif de démarrage faisant partie d'un calculateur, le calculateur comprenant également au moins une mémoire, chaque mémoire mémorisant au moins un programme de démarrage propre à démarrer l'au moins une unité de traitement, le dispositif de démarrage comprenant un contrôleur et un circuit d'interfaçage, le circuit d'interfaçage présentant plusieurs configurations de liaison, chaque configuration de liaison étant unique et permettant d'établir au moins une liaison, chaque liaison étant une liaison entre la ou l'une des mémoire(s) et le contrôleur ou une liaison entre la ou l'une des mémoire(s) et la ou l'une des unité(s) de traitement, le contrôleur étant propre à configurer le circuit d'interfaçage et à commander un démarrage de chaque unité de traitement au moyen d'un programme à exécuter parmi l'au moins un programme de démarrage.

Suivant d'autres aspects avantageux de l'invention, le dispositif de démarrage comprend une ou plusieurs des caractéristiques suivantes, prises isolément ou suivant toutes les combinaisons techniquement possibles :
- le contrôleur est, en outre, configuré pour détecter si chaque unité de traitement démarre correctement ;
- le contrôleur est, en outre, configuré pour réaliser au moins une action de mitigation, l'au moins une action de mitigation comprenant au moins une action parmi le groupe constitué de :
   - un redémarrage du programme à exécuter ;
   - un arrêt d'une exécution du programme à exécuter ;
   - une sélection d'un programme de secours, distinct du programme à exécuter, parmi l'au moins un programme de démarrage ;
   - une modification de la configuration du circuit d'interfaçage ;
   - une vérification du ou de l'un des programme(s) de démarrage et une correction dudit programme de démarrage en cas de détection d'une anomalie lors de la vérification ; et
   - une mise à jour du ou de l'un des programme(s) de démarrage ;
- le circuit d'interfaçage comprend des composants, chaque composant étant un composant électronique discret.

L'invention concerne également un calculateur comprenant un dispositif de démarrage selon ce qui précède, au moins une unité de traitement, et au moins une mémoire, chaque mémoire mémorisant au moins un programme de démarrage propre à démarrer l'au moins une unité de traitement, un démarrage de chaque unité de traitement étant configuré pour être commandé par le dispositif de démarrage.

Suivant d'autres aspects avantageux de l'invention, le calculateur comprend une ou plusieurs des caractéristiques suivantes, prises isolément ou suivant toutes les combinaisons techniquement possibles :
- le calculateur comprend au moins deux mémoires ;
- chaque unité de traitement est un processeur, un FPGA ou un système sur puce ;
- chaque unité de traitement comprend une interface de démarrage selon un protocole QSPI.

L'invention concerne également un procédé de démarrage d'une unité de traitement, mis en œuvre par un dispositif de démarrage, l'unité de traitement faisant partie d'un calculateur, le calculateur comprenant également au moins une mémoire, chaque mémoire mémorisant au moins un programme de démarrage propre à démarrer l'au moins une unité de traitement, le dispositif de démarrage comprenant un contrôleur et un circuit d'interfaçage, le circuit d'interfaçage présentant plusieurs configurations de liaison, chaque configuration de liaison étant unique et permettant d'établir au moins une liaison, chaque liaison étant une liaison entre la ou l'une des mémoire(s) (9A, 9B, 9C) et le contrôleur ou une liaison entre la ou l'une des mémoire(s) et la ou l'une des unité(s) de traitement, le contrôleur étant propre à configurer le circuit d'interfaçage et à commander un démarrage de chaque unité de traitement au moyen d'un programme à exécuter parmi l'au moins un programme de démarrage, le procédé de démarrage comprenant :
- une étape de configuration par le contrôleur du circuit d'interfaçage dans une configuration permettant un démarrage de l'unité de traitement; puis
- une étape de démarrage de l'unité de traitement au moyen du programme à exécuter.

Suivant un autre aspect avantageux de l'invention, le procédé de démarrage comprend en outre :
- une étape de contrôle par le contrôleur d'un démarrage correct ou non de l'unité de traitement ; puis
- une étape de mitigation, comprenant une réalisation par le contrôleur d'une action de mitigation, l'étape de mitigation étant déclenchée s'il a été détecté, au terme de l'étape de contrôle, que l'unité de traitement n'a pas démarré correctement.

L'invention apparaîtra plus clairement à la lecture de la description qui va suivre, donnée uniquement à titre d'exemple non limitatif, et faite en référence aux dessins dans lesquels :
- La figure 1 est un schéma d'un exemple de calculateur comprenant un dispositif de démarrage, et
- La figure 2 est un logigramme d'un exemple de procédé de démarrage du calculateur de la figure 1.

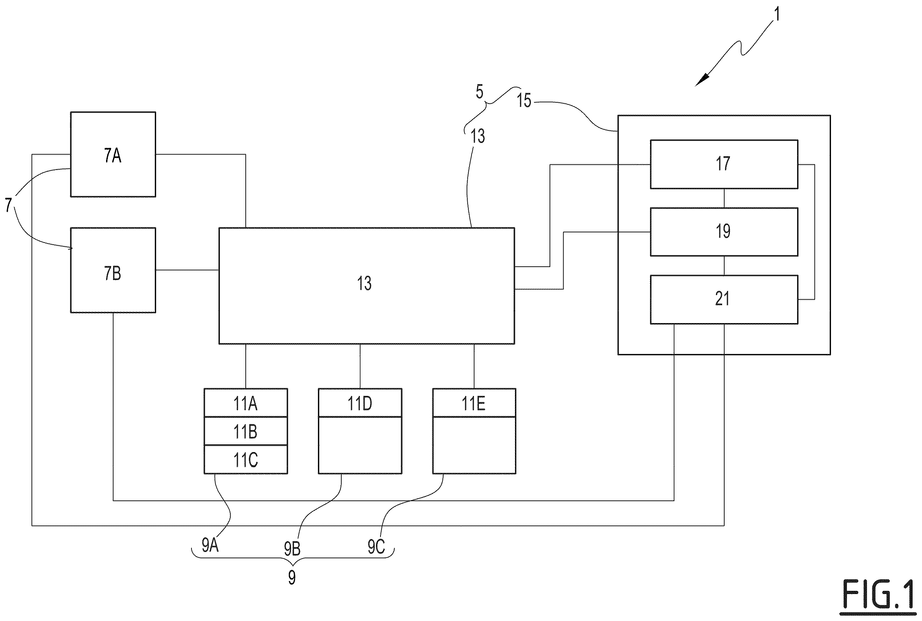

La figure 1 représente un calculateur 1 comprenant au moins une unité de traitement 7, au moins une mémoire 9 (de préférence au moins deux mémoires 9) et un dispositif de démarrage 5. En l'occurrence, dans l'exemple de la figure 1, le calculateur 1 comprend une première unité de traitement 7A et une deuxième unité de traitement 7B, ainsi qu'une première mémoire 9A, une deuxième mémoire 9B et une troisième mémoire 9C.

La calculateur 1 appartient par exemple à un système critique, c'est-à-dire un système réalisant des actions impactant la sécurité ou l'intégrité du système ou d'un environnement du système.

Par exemple, le système appartient à un véhicule spatial et est configuré pour réaliser des actions de commande du véhicule spatial.

Chaque unité de traitement 7 est un composant électronique apte à exécuter des instructions logicielles. En particulier, chaque unité de traitement 7 est configurée pour commander une exécution des actions précitées, telles que les actions de commande du véhicule spatial.

Chaque unité de traitement 7 est avantageusement un processeur, un FPGA (de l'anglais *Field Programmable Gate Array*) ou un système sur puce, aussi appelé SoC (de l'anglais *System On a Chip*)*.*

Chaque unité de traitement 7 comprend une interface de démarrage, par exemple une interface de démarrage suivant le protocole QSPI (de l'anglais *Quad Serial Peripheral Interface*), permettant à l'unité de traitement 7 de démarrer en s'interfaçant avec un autre composant, comprenant un programme de démarrage, et en exécutant ce programme de démarrage. En particulier, l'interface de démarrage comprend au moins un port de connexion électrique, par l'intermédiaire duquel l'unité de traitement 7 s'interface avec le composant précité. En complément facultatif, l'unité de traitement 7 est apte à s'interfacer avec un autre composant comprenant deux programmes de démarrage distincts et d'exécuter ces deux programmes en parallèle. Les deux programmes de démarrage comprennent par exemple un programme de démarrage opérationnel et un programme de démarrage sans échec.

Chaque mémoire 9 est un composant électronique apte à mémoriser des instructions logicielles, par exemple une mémoire non volatile de type mémoire flash NOR.

En particulier, chaque mémoire 9 mémorise au moins un programme de démarrage 11A, 11B, 11C, 11D et/ou 11E. Dans l'exemple de la figure 1, la première mémoire 9A comprend un premier programme 11A, un deuxième programme 11B et un troisième programme 11C, la deuxième mémoire 9B comprend un quatrième programme 11D et la troisième mémoire 9C comprend un cinquième programme 11E.

Chaque programme de démarrage 11A, 11B, 11C, 11D et 11E est apte à démarrer au moins l'une des unités de traitement 7, lorsque l'unité de traitement 7 exécute ce programme de démarrage 11A, 11B, 11C, 11D ou 11E après s'être interfacé avec la mémoire 9 contenant ce programme 11A, 11B, 11C, 11D ou 11E au moyen de son interface de démarrage.

Pour que cet interfaçage puisse avoir lieu, la mémoire 9 et l'unité de traitement 7 doivent être connectées électriquement entre elles. Plus précisément, la mémoire 9 doit être connectée à l'interface de démarrage de l'unité de traitement 7.

Avantageusement, au moins deux des programmes de démarrage 11A, 11B, 11C, 11D et 11E comprennent initialement les mêmes instructions logicielles. Par exemple, les quatrième et cinquième programmes de démarrage 11D et 11E sont initialement des copies du premier programme de démarrage 11A, tandis ce que les deuxième et troisième programmes de démarrage 11B et 11C comprennent initialement des programmes de démarrage différents du premier programme de démarrage 11A. Cette redondance permet de diminuer un risque de perte des instructions logicielles initialement contenues dans les premiers, quatrième et cinquième programmes de démarrage 11A, 11D et 11E en cas de défaillance de l'une des mémoires 9.

Le dispositif de démarrage 5 a pour fonction de démarrer l'une des unités de traitement 7, au moyen d'au moins l'un des programmes de démarrage 11A, 11B, 11C, 11D et/ou 11E, après réception d'une commande de démarrage provenant d'un composant externe au calculateur 1.

Pour ce faire, le dispositif de démarrage 5 comprend un circuit d'interfaçage 13 et un contrôleur 15.

Le circuit d'interfaçage 13 et le contrôleur 15 sont distincts l'un de l'autre.

Le circuit d'interfaçage 13 présente plusieurs configurations de liaison, chaque configuration de liaison permettant d'établir au moins une liaison, chaque liaison étant une liaison entre une mémoire 9 et le contrôleur 15 ou une liaison entre une mémoire 9 et une unité de traitement 7.

Une liaison entre deux composants est une connexion électrique permettant aux deux composants d'échanger des données entre eux. Ainsi, une configuration est un ensemble de liaisons. Chaque configuration est unique, c'est-à-dire que, pour chaque couple de configurations, il existe au moins une liaison qui est présente dans l'une des configurations et absente dans l'autre des configurations.

Selon l'exemple décrit, le circuit d'interfaçage 13 est composé de composants électroniques discrets. En d'autres termes, le circuit d'interfaçage 13 est un ensemble de circuits intégrés peu complexes. Par exemple, le circuit d'interfaçage 13 comprend un ou plusieurs amplificateur(s) tampon(s) et/ou un ou plusieurs amplificateur(s) d'isolation. En variante, le circuit d'interfaçage 13 est composé de connexions point à point directes entre les mémoires 9 et le contrôleur 15 et entre les mémoires 9 et les unités de traitement 7. Dans cette variante, les liaisons sont établies ou interrompues par le contrôleur 15 en agissant sur les mémoires 9, par exemple en envoyant un signal de réinitialisation à une mémoire 9 afin de la passer en haute impédance.

En pratique, les composants électroniques discrets sont configurés pour basculer dans différents états selon une commande du contrôleur 15, interrompant ou rétablissant ainsi une liaison.

Avantageusement, les unités de traitement 7 et les mémoires 9 sont des composants plus performants, mais moins robustes, que le contrôleur 15.

On entend par là que les unités de traitement 7 et les mémoires 9 permettent des échanges de données plus performants, plus rapides et plus complexes que le contrôleur 15 ; tandis ce que le risque d'altération du contrôleur 15 est inférieur au risque d'altération des unités de traitement 7 et des mémoires 9.

La performance des unités de traitement 7 est donnée par des fréquences de fonctionnement ainsi que par des latences de ces unités de traitement 7.

La robustesse du contrôleur 15 réside dans sa technologie électronique. Par exemple, les mémoires 9 sont des composants « COTS » (de l'anglais *Commercial off the shelf*) alors que le contrôleur 15 est un composant spécialisé et robuste pour l'application, par exemple pour un environnement spatial.

Le contrôleur 15 est configuré pour contrôler la configuration du circuit d'interfaçage 13 et pour commander un démarrage de chaque unité de traitement 7 au moyen d'un programme à exécuter 11A parmi l'au moins un programme de démarrage 11A, 11B, 11C, 11D et/ou 11E.

D'un point de vue fonctionnel, et comme représenté schématiquement sur la figure 1, le contrôleur 15 comprend un module de mitigation 17, un module d'interfaçage 19 et un module de contrôle 21. Le rôle de chacun de ces modules est précisé dans la suite de la description.

Le contrôleur 15 est, par exemple, un composant logique programmable, tel qu'un FPGA (de l'anglais *Field Programmable Gate Array*), ou encore d'un circuit intégré, tel qu'un ASIC (de l'anglais *Application Specific Integrated Circuit*). Le module de mitigation 17, le module d'interfaçage 19 et le module de contrôle 21 sont alors chacun une sous-partie physique dudit composant logique programmable.

En variante, le module de mitigation 17, le module d'interfaçage 19 et le module de contrôle 21 sont réalisés chacun sous forme d'un composant logique programmable distinct, tel qu'un FPGA (de l'anglais *Field Programmable Gate Array*), ou encore d'un circuit intégré, tel qu'un ASIC (de l'anglais *Application Specific Integrated Circuit*).

Avantageusement, le contrôleur 15 comprend en outre une mémoire de contrôle mémorisant des règles définissant les programmes de démarrage à sélectionner et les actions de mitigation à commander en fonction d'une situation courante.

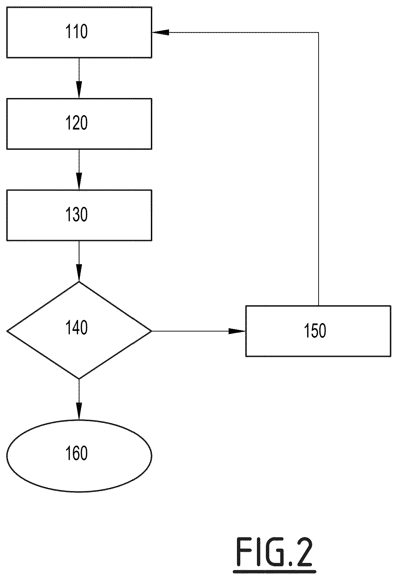

Un procédé de démarrage d'une unité de traitement 7, mis en oeuvre par le dispositif de démarrage 5, est représenté sur la figure 2 et un exemple de réalisation d'un tel procédé est décrit dans la suite de la description.

Le procédé de démarrage est déclenché par l'arrivée de la commande de démarrage précitée, reçue par le contrôleur 15.

Le procédé comprend une étape de configuration du circuit d'interfaçage 110 et une étape de démarrage 120. Selon l'exemple décrit, le procédé comprend, en outre, une étape de contrôle 130, une étape de test 140 et une étape de mitigation 150.

Suite à la réception de la commande de démarrage d'une unité de traitement 7, dite unité de traitement à démarrer 7A, le contrôleur 15 sélectionne, en fonction des règles stockées dans la mémoire de contrôle, un programme de démarrage à exécuter parmi les programmes de démarrage 11A, 11B, 11C, 11D et 11E. Les règles sont telles que le programme de démarrage à exécuter est apte à démarrer l'unité de traitement à démarrer 7A. Par exemple, les premier, quatrième et cinquième programmes de démarrage 11A, 11D et 11E permettent de démarrer l'unité de traitement à démarrer 7A, et les règles prévoient qu'en cas de commande de démarrage de l'unité de traitement à démarrer 7A, le programme à exécuter est le premier programme de démarrage 11A.

Ensuite, le module d'interfaçage 19 du contrôleur 15 détermine une configuration du circuit d'interface 13 permettant d'établir une liaison entre l'unité de traitement à démarrer 7A et la première mémoire 9 mémorisant le programme à exécuter 11A. Puis, le module d'interfaçage 19 configure le circuit d'interfaçage 13 pour qu'il soit dans la configuration déterminée, au cours de l'étape de configuration du circuit d'interfaçage 13.

Ainsi, à l'issue de l'étape de configuration du circuit d'interfaçage 13, la liaison entre l'unité de traitement à démarrer 7A et la première mémoire 9A mémorisant le programme à exécuter 11A est établie.

Lors de l'étape de démarrage 120, le contrôleur 15 commande l'exécution du programme de démarrage à exécuter 11A par l'unité de traitement à démarrer 7A.

Pour ce faire, le contrôleur 15 envoie par exemple un signal électrique de réinitialisation, ou signal de mise sous tension, à l'unité de traitement à démarrer 7A.

L'étape de contrôle 130 est mise en oeuvre par le module de contrôle 21.

Au cours de cette étape de contrôle 130, le module de contrôle 21 du contrôleur 15 contrôle si l'unité de traitement 7A à démarrer démarre correctement ou non, au moyen de la connexion entre le module de contrôle 21 et l'unité de traitement à démarrer 7A.

Par exemple, ce contrôle est réalisé au moyen de signaux de statut échangés entre le module de contrôle 21 et l'unité de traitement 7 ou d'un acquittement de l'unité de traitement 7 vers le module de contrôle 21. Cet acquittement est, par exemple, réalisé par un signal électrique ou un échange sur un bus numérique indiquant l'état de l'unité de traitement 7.

Au terme de l'étape de contrôle 130, une étape de test 140 permet de déterminer si l'unité de traitement à démarrer 7A a correctement démarré, ou bien si une erreur de démarrage est survenue.

Si, au terme de l'étape de test 140, le contrôleur 15 a détecté que l'unité de traitement à démarrer 7A a correctement démarré, alors le procédé est terminé ; il s'agit de l'état démarré 160.

Si au contraire, au terme de l'étape de contrôle 130, le contrôleur 15 a détecté que l'unité de traitement à démarrer 7A n'a pas correctement démarré, cela signifie qu'une erreur est survenue lors de l'exécution du programme à exécuter 11A. L'étape de mitigation 150 est alors mise en œuvre par le module de mitigation 17.

Lors de l'étape de mitigation 150, une action de mitigation est commandée par le module de mitigation 17 selon les règles stockées dans la mémoire de contrôle du contrôleur 15. L'action de mitigation est avantageusement un redémarrage du programme à exécuter 11A ; un arrêt de l'exécution du programme à exécuter 11A ; une sélection d'un programme de secours 11D, distinct du programme à exécuter 11A, parmi au moins un programme de démarrage 11A, 11B, 11C, 11D et 11E ; une modification de la configuration du circuit d'interfaçage 13 ; une vérification du ou de l'un des programmes de démarrage 11A, 11B, 11C, 11D, 11E et une correction dudit programme de démarrage 11A, 11B, 11C, 11D, 11E en cas de détection d'une anomalie lors de la vérification ; ou une mise à jour du ou de l'un des programmes de démarrage 11A, 11B, 11C, 11D ou 11E.

Par exemple, le module de mitigation 17 sélectionne un programme de secours, distinct du programme à exécuter 11A. Le programme de secours est par exemple le quatrième programme de démarrage 11D, mémorisé sur la deuxième mémoire 9B, distincte de la première mémoire 9A mémorisant le programme à exécuter 11A.

Ensuite, les étapes 110 à 130 sont répétées pour réessayer de démarrer l'unité de traitement 7. En particulier, dans l'exemple précédent, le programme de secours 11D étant mémorisé sur la deuxième mémoire 9B, l'étape de configuration du circuit d'interfaçage 110 comprend un changement de configuration du circuit d'interfaçage 13 de sorte que l'unité de traitement à démarrer 7A soit reliée à la deuxième mémoire 9B. De même, l'exécution du programme de secours 11D est lancée lors de l'étape de démarrage 120.

Selon cet exemple, le programme de secours 11D permet à l'unité de traitement à démarrer 7A de démarrer correctement, ce qui est détecté par le module de contrôle 21 lors de l'étape de contrôle 130. Ainsi, l'étape de test 140 est positive et aboutit à l'état démarré 160.

D'autres exemples de réalisation du procédé de démarrage sont possibles.

Ainsi, selon un autre exemple, le programme de secours est le deuxième programme de démarrage 11B, également apte à démarrer l'unité de traitement à démarrer 7A, stocké sur la même mémoire 9A que le programme à exécuter 11A. Généralement, le programme de secours est un programme de démarrage qui était initialement une copie du programme à exécuter 11A. Ainsi, si une altération a endommagé les instructions contenues dans le programme à exécuter 11A, menant à l'erreur de démarrage, les instructions originelles peuvent être récupérées dans le programme de secours.

Selon encore un autre exemple, une autre action de mitigation est réalisée lors de l'étape de mitigation 150. Par exemple, le module de mitigation 17 commande un redémarrage du programme à exécuter 11A en envoyant un signal de réinitialisation ou de mise sous tension à l'unité de traitement à démarrer 7A. Selon cet exemple, seules les étapes de démarrage 120, de contrôle 130 et de test 140 sont à nouveau réalisées. En effet, la configuration du circuit d'interfaçage 13 n'a pas besoin d'être modifiée dans ce cas.

Selon l'action de mitigation réalisée, toutes, seulement une partie, ou aucune des étapes de configuration du circuit d'interfaçage 110 et de démarrage 120 ne sont répétées.

Quelle que soit l'action de mitigation réalisée, le démarrage étant de nouveau supervisé suite à la répétition des étapes de contrôle 130 et de test 140, plusieurs actions de mitigation successives peuvent être réalisées en cas de persistance de l'erreur de démarrage.

En variante, le contrôleur 15 vérifie systématiquement le programme de démarrage à exécuter ou de secours avant de commander son exécution. En cas d'erreur détectée lors de la vérification, le contrôleur 15 réalise alors directement une correction du programme de démarrage en question, ou exécute une autre action de mitigation. En parallèle du démarrage de l'unité de traitement à démarrer 7A, le dispositif de démarrage 5 permet la réalisation d'actions de mitigation sur d'autres mémoires 9B et/ou 9C que la mémoire 9A impliquée dans le démarrage. En effet, du fait de la gestion des liaisons par le circuit d'interfaçage 13, une liaison peut être établie entre une unité de traitement 7 et une mémoire 9 en même temps et indépendamment d'une liaison entre une autre mémoire 9 et le contrôleur 15. Ainsi, le contrôleur 15 peut agir sur l'autre mémoire 9, par exemple vérifier et corriger un programme de démarrage ou mettre à jour un programme de démarrage, indépendamment du démarrage de l'unité de traitement à démarrer 7A.

Ainsi, le dispositif de démarrage 5 permet une correction ou une mise à jour de programmes de démarrage sans interruption de service.

En particulier, le dispositif de démarrage 5 permet de faire de la maintenance préventive des programmes de démarrage 11A, 11B, 11C, 11D ou 11E mémorisés dans les mémoires 9.

Toute caractéristique décrite ci-dessus pour un exemple ou une variante, peut être mise en œuvre également dans les autres exemples et variantes décrits ci-dessus, pour autant que techniquement possible.

Cependant, dans tous les cas, le calculateur 1 comprend le dispositif de démarrage 5, au moins une unité de traitement 7A et/ou 7B et au moins une mémoire 9A, 9B et/ou 9C, chaque mémoire 9A, 9B et/ou 9C mémorise au moins un programme de démarrage 11A, 11B, 11C, 11D et/ou 11E propre à démarrer au moins une unité de traitement 7A et/ou 7B, le dispositif de démarrage 5 comprend le contrôleur 15, et le circuit d'interfaçage 13, le circuit d'interfaçage 13 présente plusieurs configurations de liaison, chaque configuration de liaison étant unique et permettant d'établir au moins une liaison, chaque liaison étant une liaison entre une mémoire 9A, 9B ou 9C et le contrôleur 15 ou une liaison entre une mémoire 9A, 9B ou 9C et une unité de traitement 7A ou 7B, et le contrôleur 15 est propre à contrôler la configuration du circuit d'interfaçage 13 et à commander un démarrage de chaque unité de traitement 7A et 7B au moyen du programme à exécuter.

Grâce à l'invention, le démarrage peut être géré par le contrôleur 15, composant robuste, sans impacter la performance de la liaison entre mémoire 9 et unité de traitement 7 au cours du démarrage. En effet, une fois la configuration du circuit d'interfaçage 13 établie sous le contrôle du contrôleur 15 pour démarrer une unité de traitement 7, la liaison entre la mémoire 9 comprenant le programme de démarrage à exécuter et l'unité de traitement 7 en question est directe, et le programme de démarrage ne transite pas par le contrôleur 15. Ainsi, le démarrage est à la fois fiable et robuste, du fait de la fiabilité et la robustesse du contrôleur 15, et performant, du fait de la performance de la liaison entre mémoire 9 et unité de traitement 7. En d'autres termes, la rapidité d'un échange de données entre deux composants de part et d'autre d'une liaison est déterminée par les performances desdits composants sans être altérée par le circuit d'interfaçage 13.

En particulier, le circuit d'interfaçage 13, en réalisant des liaisons directes entre une unité de traitement 7 et une mémoire 9, permet de garantir la performance des échanges entre l'unité de traitement 7 et la mémoire 9, indépendamment de la performance du contrôleur 15. De même, en réalisant des liaisons directes entre une mémoire 9 et le contrôleur 15, le circuit d'interfaçage 13 permet de garantir la robustesse des échanges entre la mémoire 9 et le contrôleur 15, sans impacter la performance des unités de traitement 7. En d'autres termes, le circuit d'interfaçage 13 permet d'allier performance et robustesse du calculateur 1.

La redondance des programmes à démarrer ainsi que les différentes actions de mitigation permettent d'assurer la fiabilité du démarrage même en cas d'altération d'un programme à démarrer ou d'une mémoire 9.

En outre, le dispositif de démarrage 5 ne nécessite que des composants usuels et peu onéreux ; ainsi, la mise en œuvre du calculateur 1 est aisée.

Selon un mode de réalisation, l'échange de données via le circuit d'interfaçage 13 implique une transmission directe et sans aucun traitement entre les éléments, de sorte que le circuit d'interfaçage 13 ne réalise pas de traitement de données.

En d'autres termes, le circuit d'interfaçage 13 ne comprend pas de processeur ou du moins n'en utilise pas pour traiter les données. En ce sens, le circuit d'interfaçage 13 est un composant passif acheminant simplement les données vers l'élément censé recevoir lesdites données

Ce mode de réalisation autorise ainsi une connexion directe entre les unités de traitement 7A ou 7B et les mémoires 11A, 11B, 11C, 11D ou 11E.

Notamment, la connexion est configurée par le contrôleur 15 sans intervention d'un processeur de l'un quelconque des éléments impliqués dans l'échanges de données, à savoir le circuit d'interfaçage 13, une unité de traitement 7A ou 7B ou une mémoire 11A, 11B, 11C, 11D ou 11E.

Une telle configuration permet d'éviter les phases intermédiaires de traitement, telles que la bufferisations ou l'abaissement de la fréquence du bus.

Cette absence se distingue des architectures classiques de démarrage processeur dans les environnements critiques où de telles phases sont nécessaires pour gérer les flux de données. Le démarrage est ainsi amorcé dès l'activation.

En cas d'échec du démarrage, le contrôleur 15 est configuré pour reconfigurer dynamiquement le chemin d'accès du circuit d'interfaçage 13 vers un autre programme de démarrage dans une autre mémoire 11A, 11B, 11C, 11D ou 11E, sans réinitialisation des unités de traitement 7A ou 7B, ce qui permet une mitigation rapide et sans interruption.

Préférentiellement, cette reconfiguration est réalisée sans traitement de données.

Ces mécanismes assurent une exécution plus rapide, déterministe et robuste du processus de démarrage, répondant aux fortes exigences de disponibilité et de fiabilité propres aux systèmes embarqués critiques.

## Revendications

1. Dispositif de démarrage (5) d'au moins une unité de traitement (7A, 7B), l'au moins une unité de traitement (7A, 7B) et le dispositif de démarrage (5) faisant partie d'un calculateur (1), le calculateur (1) comprenant également au moins une mémoire (9A, 9B, 9C), chaque mémoire (9A, 9B, 9C) mémorisant au moins un programme de démarrage (11A, 11B, 11C, 11D, 11E) propre à démarrer l'au moins une unité de traitement (7A, 7B), le dispositif de démarrage (5) comprenant :
- un contrôleur (15), et
- un circuit d'interfaçage (13), le circuit d'interfaçage (13) présentant plusieurs configurations de liaison, chaque configuration de liaison étant unique et permettant d'établir au moins une liaison, chaque liaison étant une liaison entre la ou l'une des mémoire(s) (9A, 9B, 9C) et le contrôleur (15) ou une liaison entre la ou l'une des mémoire(s) (9A, 9B, 9C) et la ou l'une des unité(s) de traitement (7A, 7B) ;
le contrôleur (15) étant propre à configurer le circuit d'interfaçage (13) et à commander un démarrage de chaque unité de traitement (7A, 7B) au moyen d'un programme à exécuter (11A) parmi l'au moins un programme de démarrage (11A, 11B, 11C, 11D, 11E).

2. Dispositif (5) selon la revendication 1, dans lequel le contrôleur (15) est, en outre, configuré pour détecter si chaque unité de traitement (7A, 7B) démarre correctement.

3. Dispositif (5) selon l'une quelconque des revendications précédentes, dans lequel le contrôleur (15) est, en outre, configuré pour réaliser au moins une action de mitigation, l'au moins une action de mitigation comprenant au moins une action parmi le groupe constitué de :
- un redémarrage du programme à exécuter (11A) ;
- un arrêt d'une exécution du programme à exécuter (11A) ;
- une sélection d'un programme de secours (11D), distinct du programme à exécuter (11A), parmi l'au moins un programme de démarrage (11A, 11B, 11C, 11D, 11E) ;
- une modification de la configuration du circuit d'interfaçage (13) ;
- une vérification du ou de l'un des programme(s) de démarrage (11A, 11B, 11C, 11D, 11E) et une correction dudit programme de démarrage (11A, 11B, 11C, 11D, 11E) en cas de détection d'une anomalie lors de la vérification ; et
- une mise à jour du ou de l'un des programme(s) de démarrage (11A, 11B, 11C, 11D, 11E).

4. Dispositif (5) selon l'une quelconque des revendications précédentes, dans lequel le circuit d'interfaçage (13) comprend des composants, chaque composant étant un composant électronique discret.

5. Calculateur (1) comprenant :
- un dispositif de démarrage (5) selon l'une quelconque des revendications 1 à 4,
- au moins une unité de traitement (7A, 7B), et
- au moins une mémoire (9A, 9B, 9C), chaque mémoire (9A, 9B, 9C) mémorisant au moins un programme de démarrage (11A, 11B, 11C, 11D, 11E) propre à démarrer l'au moins une unité de traitement (7A, 7B) ;
un démarrage de chaque unité de traitement (7A, 7B) étant configuré pour être commandé par le dispositif de démarrage (5).

6. Calculateur (1) selon la revendication 5, comprenant au moins deux mémoires (9A, 9B, 9C).

7. Calculateur (1) selon l'une quelconque des revendications 5 ou 6, dans lequel chaque unité de traitement (7A, 7B) est un processeur, un FPGA ou un système sur puce.

8. Calculateur (1) selon l'une quelconque des revendications 5 à 7, dans lequel chaque unité de traitement (7A, 7B) comprend une interface de démarrage selon un protocole QSPI.

9. Procédé de démarrage d'une unité de traitement (7A, 7B), mis en œuvre par un dispositif de démarrage (5), l'unité de traitement (7A, 7B) faisant partie d'un calculateur (1), le calculateur (1) comprenant également au moins une mémoire (9A, 9B, 9C), chaque mémoire (9A, 9B, 9C) mémorisant au moins un programme de démarrage (11A, 11B, 11C, 11D, 11E) propre à démarrer l'au moins une unité de traitement (7A, 7B), le dispositif de démarrage (5) comprenant :
- un contrôleur (15), et
- un circuit d'interfaçage (13), le circuit d'interfaçage (13) présentant plusieurs configurations de liaison, chaque configuration de liaison étant unique et permettant d'établir au moins une liaison, chaque liaison étant une liaison entre la ou l'une des mémoire(s) (9A, 9B, 9C) et le contrôleur (15) ou une liaison entre la ou l'une des mémoire(s) (9A, 9B, 9C) et la ou l'une des unité(s) de traitement (7A, 7B) ;
le contrôleur (15) étant propre à configurer le circuit d'interfaçage (13) et à commander un démarrage de chaque unité de traitement (7A, 7B) au moyen d'un programme à exécuter (11A) parmi l'au moins un programme de démarrage (11A, 11B, 11C, 11D, 11E) ;
le procédé de démarrage comprenant :
- une étape de configuration (110) par le contrôleur (15) du circuit d'interfaçage (13) dans une configuration permettant un démarrage de l'unité de traitement (7A, 7B) ; puis
- une étape de démarrage (120) de l'unité de traitement (7A, 7B) au moyen du programme à exécuter (11A).

10. Procédé selon la revendication 9, comprenant en outre :
- une étape de contrôle (130) par le contrôleur (15) d'un démarrage correct ou non de l'unité de traitement (7A, 7B) ; puis
- une étape de mitigation (150), comprenant une réalisation par le contrôleur (15) d'une action de mitigation, l'étape de mitigation (150) étant déclenchée s'il a été détecté, au terme de l'étape de contrôle (130), que l'unité de traitement (7A, 7B) n'a pas démarré correctement.
